# EUROPEAN PATENT SPECIFICATION

(11) **EP 0 686 459 B1**
(45) Date of publication and mention of the grant of the patent: **13.11.2002**
(21) Application number: 95303990.6
(22) Date of filing: 09.06.1995
(51) Int. Cl.: B23Q 3/08, G01M 11/02

(54) **A method of positioning ophthalmic lenses**
Verfahren zum Positionieren von ophthalmischen Linsen
Procédé pour le positionnement de lentilles ophtalmiques

(30) Priority: 10.06.1994 US 258266
(43) Date of publication of application: 13.12.1995
(73) Proprietor: JOHNSON & JOHNSON VISION PRODUCTS, INC., Jacksonville, Florida 32216 (US)
(72) Inventor: Keene, Darren S., Jacksonville, Florida 32257 (US)
(74) Representative: Mercer, Christopher Paul

(56) References cited:
- US-A- 4 691 820
- US-A- 4 738 530
- US-A- 5 080 839
- US-A- 5 264 161
- PATENT ABSTRACTS OF JAPAN vol. 014, no. 050 (P-0998), 30 January 1990 & JP 01 279222 A (MASAAKI HAGA), 9 November 1989,

## Description

### BACKGROUND OF THE INVENTION

This invention generally relates to methods of handling ophthalmic lenses, and more specifically to methods for positioning or centering ophthalmic lenses, such as contact lenses, in a carrier or holder.

Contact lenses are, typically, made with a high degree of precision and accuracy. Nevertheless, on rare occasion, a particular lens may contain some irregularity; and, for this reason, contact lenses are inspected before sale to the consumer to be certain that the lenses are acceptable for consumer use.

Contact lenses may be inspected by placing the lenses on transparent carriers or holders and transporting the carriers or holders to a lens inspection station. At that station, light is transmitted through the lenses and focused on a screen to produce images of the lenses thereon. The lens images are then observed or analyzed, either by a person or by automated image processing equipment, to determine if the lenses are acceptable.

When automated equipment is used to analyze the image of a lens, it is important that the lens be positioned relatively precisely in a preset location at the lens inspection station. This, in turn, requires, first, that the lens carrier be positioned in a given location at the lens inspection station, and second, that the lens be precisely positioned in a particular location in the carrier. This latter objective is generally achieved by providing the carrier with a concave recess or bowl and placing the lens in that recess so that gravity tends to force the lens downward in the recess, into a predetermined, normally centered position therein. Typically, the recess contains a small quantity of a fluid solution, such as deionized water, to help keep the lens moist, and this solution also helps the lens slide down the recess.

When deionized water is used in the carrier recesses, friction or hydrophobic attraction between the contact lens and the surfaces of the carrier that form the recesses may occasionally prevent the lenses from moving or sliding completely into the desired, predetermined positions. For example, in one known process, contact lenses are formed from a liquid hydrogel monomer, which is polymerized in the presence of an inert diluent such as boric acid ester, as described in U.S. Patent No. 4,495,313. The inert diluent fills up the spaces in the hydrogel lens during polymerization, and the diluent is subsequently exchanged for deionized water during a hydration process.

After this hydration process is completed, small amounts of the acid groups may remain on the lens surface. When the lens is placed inside the recess of the lens carrier, these acid groups may cause the lens to stick to the surface of the bowl of the carrier. Without freedom of movement, the lens might not move completely into the desired predetermined position. When this happens and the lens is subsequently inspected using automated image processing equipment, the lens may be rejected for being outside the field of view, or may otherwise be erroneously identified as irregular or imperfect.

US-A-5264161 makes known the use of a surfactant to assist in removing a contact lens from a carrier.

US-A-5080839, on the other hand, makes known a method of inspecting a contact lens in which the contact lens is conveyed to an inspection station in de-ionized water in a concave recess of a carrier. A problem with this method is that the contact lenses can "stick" to the recess leading to satisfactory lenses being classified as flawed due to them not being located in the inspection area of the recess. The pre-characterizing part of claim 1 appended hereto is based on this US patent.

### SUMMARY OF THE INVENTION

An object of this invention is to improve methods for handling ophthalmic lenses.

Another object of the present invention is to help position ophthalmic lenses in predetermined locations in lens carriers.

A further object of this invention is to improve methods for inspecting ophthalmic lenses.

Still another object of this invention is to help center contact lenses in lens carriers.

Another object of the present invention is to use surfactants as centering agents for the inspection of optical lenses.

These and other objectives are attained in a method of inspecting an ophthalmic lens according to claim 1.

In this method, the surfactant reduces the friction and retards the hydrophobic attraction between the lens and the surface of the carrier forming the recess, helping to insure that the lens is pulled into the desired, predetermined position. Tween 80® has been found to be a suitable surfactant, and acceptable results have been achieved with surfactant levels as low as twenty-five parts per million.

Preferred features of the invention are set out in the dependent claims.

Further benefits and advantages of the invention will become apparent from a consideration of the following detailed description given with reference to the accompanying drawings, which specify and show preferred embodiments of the invention.

### BRIEF DESCRIPTION OF THE DRAWINGS

Figure 1 illustrates steps in a method according to an embodiment of the present invention.
Figure 2 shows a lens carrier in a lens inspection station.
Figure 3 is an isometric view of the lens carrier.
Figure 4 is a side view of the lens carrier.

### DETAILED DESCRIPTION OF THE PREFERRED EMBODIMENTS

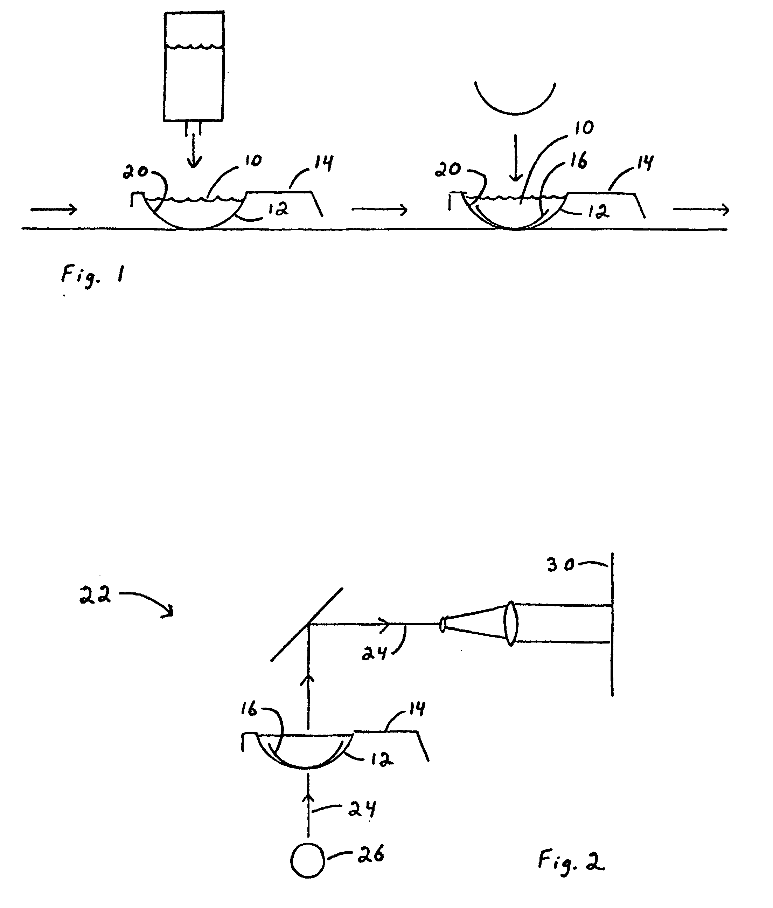

In accordance with the present invention, and with reference to Figure 1, a solution 10 containing a surfactant is conducted into a bowl or recess 12 formed in a lens carrier 14, an ophthalmic lens 16 is also placed in that recess, and the carrier is held or positioned such that gravity forces the lens into a predetermined position in the recess. The surfactant reduces the friction between lens 16 and the surfaces 20 of carrier 14 that form bowl 12, helping to insure that the lens move into the desired, predetermined position. The surfactant is particularly useful if any minute quantities of any acid groups are on the lens 16. In such a case, the surfactant also reduces the hydrophobic attraction of the lens 16 and the surface 20, allowing the lens to slide or move more freely over that surface.

Any suitable surfactant may be used in the practice of the present invention. For example, the surfactant may be polyoxyethylene 20 sorbitan monooleate, more commonly known as Polysorbate 80, or tween 80® or tween 80k^{c}®. It has been found that the addition of tween 80® at a concentration as low as 25 parts per million parts of solution allows lens 16 to move in carrier 14 without sticking. Larger amounts of the surfactant may be used, and for example, the weight percent concentration of the surfactant in the solution may be between 5.0% and 0.01%. The surfactant may be mixed in any suitable liquid carrier, such as deionized water, to form solution 10.

Preferably, the surfactant concentration in solution 10 is in the lower end of the above-given range, and for example, the surfactant concentration may be below fifty parts per million parts of deionized water. Using the surfactant at this lower concentration helps to avoid, or to reduce, any foaming or bubbling of the surfactant in the solution and helps to reduce subsequently the surfactant concentration below a predetermined level.

In addition, preferably, solution 10 is conducted into recess 12 before lens 16 is deposited therein, so that the lens is placed in the solution when the lens is placed in the recess. Moreover, preferably, solution 10 is conducted into recess 12 and lens 16 is placed therein in, and as part of, an automated process and using automated equipment. For example, carrier 14 may be moved along a predetermined path, and solution 10 and lens 16 may be deposited in the recess at first and second predetermined locations, respectively, on that path.

With a preferred embodiment of this invention, carrier 14 is used to transport lens 16 into an inspection station, schematically shown at 22 in Figure 2, and to move the lens through that station while the lens is inspected. In station 22, a light beam or pulse 24 is directed from source 26 and through the lens 16, and the light beam is then directed and focused on a screen 30 to produce an image of the lens thereon. Preferably, screen 30 includes an array of pixels, each of which generates a respective one electric signal proportional to, or representing, the intensity of the light incident on the pixel. Those electric signals are then processed to determine if the lens is acceptable for consumer use. Any suitable procedure may be used to process or analyze the electric signals from the pixel array; and, for instance, suitable procedures are disclosed in EP-A-0 604 179 and EP-A-0 604 174.

After lens 16 is inspected, recess 12 may be washed or rinsed to remove, or at least substantially reduce, the amount of surfactant in the recess. In accordance with the present invention, the concentration of the surfactant is reduced to no greater than 3 x 10⁻⁷ g/ml. Any suitable procedure may be used to remove surfactant from recess 12, and for instance, acceptable procedures are disclosed in U.S. Patent 5,080,839 and in EP-A-0 618 063.

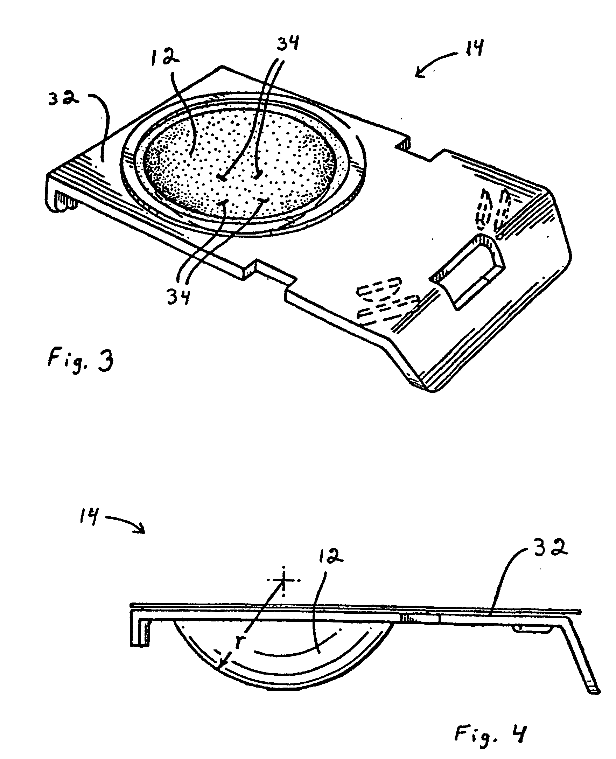

Various types of lens carriers may be used in the practice of this invention, and Figures 3 and 4 illustrate a preferred embodiment of carrier 14 in greater detail. Carrier 14 includes a substantially planar first surface 32, and formed within this planar first surface is bowl or recess 12, which is concave when viewed from the top of the carrier.

Within the bowl 12 are contained a plurality of ribs 34 that are located near, but spaced from, the center of the bowl. These ribs may be used to help hold lens 16 in recess 12 as de-ionized water is removed from the bowl 12. Preferably, the lens, when centered in recess 12, does not make contact with the ribs, and instead the lens touches only the center of the recess bottom at a point. With the embodiment of carrier 14 shown in the drawing, each rib 34 is 0.5 mm long and 0.025 mm wide, and each rib 34 is located 3.0 mm from the center of bowl 12 and 6.0 mm from the end of its collinear partner.

The radius of curvature, r, of bowl 12 is larger than the radius of curvature of the ophthalmic lens 16 to be placed therein. In this way, lens 16, when centered in bowl 12, touches the bowl at one point only, and the lens and bowl 20 do not have contact along an extended line or surface, which would create additional friction between the lens and the bowl and inhibit movement of the lens to the center of the bowl.

Carrier 14 may be made in any suitable manner and from any acceptable material. For instance, the carrier may be formed from polypropylene in an injection molding process. Carrier 14 is described in further detail in EP-A-0 604 177. Also, a wide range of types and sizes of ophthalmic lenses may be employed in the present invention. For example, ophthalmic lens 16 may be a contact lens.

While it is apparent that the invention herein disclosed is well calculated to fulfill the objects previously stated, it will be appreciated that numerous modifications and embodiments may be devised by those skilled in the art.

## Claims

1. A method of inspecting an ophthalmic lens, comprising:
providing a carrier having a concave recess (12) in which an ophthalmic lens (16) is disposed in a fluid solution (10);
positioning the carrier so that gravity forces the lens into a predetermined position in the recess; and
moving the carrier and the lens to an inspection station (22);
conducting light (24) through the lens;
analyzing the light conducted through the lens;
**characterized by** the fluid solution containing a surfactant and further by the step of:-
after the conducting step, reducing the concentration of the surfactant in the recess to not greater than 3 x 10⁻⁷ g/ml of solution.

2. A method according to Claim 1 in which the weight percent concentration of the surfactant in the fluid solution prior to the conducting step is between 5.0% and 0.01%.

3. A method according to Claim 1 or 2, wherein the fluid solution also contains deionized water.

4. A method according to Claim 1, wherein the carrier includes a surface (20) forming the recess, and the positioning step includes the step of positioning the carrier so that gravity forces the lens into the predetermined position against said surface.

5. A method according to Claim 4, wherein the positioning step includes the step of positioning the carrier so that gravity forces the lens into a predetermined, centered position in the recess.

6. A method according to any one of the preceding Claims, wherein the surfactant is polyoxyethylene 20 sorbitan monooleate.

## Patentansprüche

1. Verfahren zum Prüfen einer ophtalmischen Linse, umfassend:
- Bereitstellen eines Trägers mit einer konkaven Vertiefung (12), in der eine ophtalmische Linse (16) in einer fluiden Lösung (10) angeordnet wird,
- Positionieren des Trägers, so daß die Gravitation die Linse in eine vorbestimmte Position in der Vertiefung drückt,
- Bewegen des Trägers und der Linse zu einer Prüfstation (22),
- Leiten von Licht (24) durch die Linse; und
- Analysieren des durch die Linse geleiteten Lichtes,
**dadurch gekennzeichnet, daß**
- die Fluidlösung ein Tensid enthält, und weiter durch den Verfahrensschritt des
- Reduzierens der Konzentration des Tensides in der Vertiefung auf einen Wert nicht größer als 3 x 10⁻⁷ g/ml der Lösung, nach dem Schritt des Leitens.

2. Verfahren nach Anspruch 1, **dadurch gekennzeichnet, daß** die Gewichtsprozentkonzentration des Tensides in der fluiden Lösung vor dem Schritt des Leitens zwischen 5,0% und 0,01% liegt.

3. Verfahren nach Anspruch 1 oder 2, **dadurch gekennzeichnet, daß** die Fluidlösung auch deionisiertes Wasser enthält.

4. Verfahren nach Anspruch 1, **dadurch gekennzeichnet, daß** der Träger eine Oberfläche (20) umfaßt, die die Vertiefung bildet, und der Schritt des Positionierens den Schritt umfaßt, daß der Träger so positioniert wird, daß die Gravitation die Linse in die vorbestimmte Position gegen die Oberfläche drückt.

5. Verfahren nach Anspruch 4, **dadurch gekennzeichnet, daß** der Schritt des Positionierens den Schritt umfaßt, daß der Träger so positioniert wird, daß die Gravitation die Linse in eine vorbestimmte, zentrierte Position in der Vertiefung drückt.

6. Verfahren nach einem der vorangehenden Ansprüche, **dadurch gekennzeichnet, daß** das Tensid ein Polyoxyethylen-20-Sorbitanmonooleat ist.

## Revendications

1. Procédé d'examen d'une lentille ophtalmique, comprenant les étapes consistant à :
- prévoir un support ayant une cavité concave (12), dans laquelle une lentille ophtalmique (16) est disposée dans une solution fluide (10) ;
- positionner le support de manière à ce que la gravité entraîne la lentille jusqu'à une position prédéterminée dans la cavité ;
- déplacer le support et la lentille jusqu'à un poste d'examen (22) ;
- transmettre une lumière (24) à travers la lentille ; et
- analyser la lumière transmise à travers la lentille ;
- **caractérisé en ce que** la solution fluide contient un surfactant et **en ce que** le procédé comprend, en outre, l'étape consistant :
- après l'étape de transmission de lumière, à réduire la concentration de surfactant dans la cavité à une valeur non supérieure à 3 x 10⁻⁷ g / ml de solution.

2. Procédé selon la revendication 1, dans lequel la concentration en pourcentage en masse du surfactant dans la solution fluide, avant l'étape de transmission, est comprise entre 5,0 % et 0,01 %.

3. Procédé selon la revendication 1 ou 2, dans lequel la solution fluide contient également de l'eau dé-ionisée.

4. Procédé selon la revendication 1, dans lequel le support inclut une surface (20) formant la cavité et l'étape de positionnement inclut l'étape consistant à positionner le support de manière à ce que la gravité entraîne la lentille jusqu'à la position prédéterminée contre ladite surface.

5. Procédé selon la revendication 4, dans lequel l'étape de positionnement inclut l'étape consistant à positionner le support de manière à ce que la gravité entraîne la lentille jusqu'à une position centrée prédéterminée dans la cavité.

6. Procédé selon une quelconque des revendications précédentes, dans lequel le surfactant est du mono-oléate sorbitan polyoxyéthylène 20.
